(19) Europäisches Patentamt
European Patent Office
Office européen des brevets

(11) **EP 4 103 958 B1**

(12) **FASCICULE DE BREVET EUROPEEN**

(45) Date de publication et mention
de la délivrance du brevet:
**03.01.2024 Bulletin 2024/01**

(21) Numéro de dépôt: **21710049.4**

(22) Date de dépôt: **09.02.2021**

(51) Classification Internationale des Brevets (IPC):
**G01S 5/00** *(2006.01)* **G01S 19/40** *(2010.01)*
**G01S 19/18** *(2010.01)* **G01S 19/47** *(2010.01)*

(52) Classification Coopérative des Brevets (CPC):
**G01S 5/0072; G01S 19/40;** G01S 19/18;
G01S 19/47

(86) Numéro de dépôt international:
**PCT/IB2021/051021**

(87) Numéro de publication internationale:
**WO 2021/161157 (19.08.2021 Gazette 2021/33)**

(54) **PROCÉDÉ DE CORRECTION DE DONNÉES DE POSITIONNEMENT ENTRE DEUX PLATEFORMES ET PROCÉDÉ D'INTER-DÉSIGNATION DE MENACE ASSOCIÉ**

VERFAHREN ZUR KORREKTUR VON POSITIONSDATEN ZWISCHEN ZWEI PLATTFORMEN UND ZUGEHÖRIGES VERFAHREN ZUR INTER-BEZEICHNUNG VON BEDROHUNGEN

METHOD FOR CORRECTING POSITIONING DATA BETWEEN TWO PLATFORMS AND ASSOCIATED THREAT INTER-DESIGNATION METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.02.2020 FR 2001405**

(43) Date de publication de la demande:
**21.12.2022 Bulletin 2022/51**

(73) Titulaire: **NEXTER Systems**
**78034 Versailles Cedex (FR)**

(72) Inventeur: **HOSLIN, Dominique**
**18023 Bourges (FR)**

(74) Mandataire: **Cabinet Chaillot**
**16/20, avenue de l'Agent Sarre**
**B.P. 74**
**92703 Colombes Cedex (FR)**

(56) Documents cités:
**CN-A- 109 752 002      CN-A- 110 044 356
US-A1- 2018 128 621      US-A1- 2018 128 625**

**Description**

Le domaine technique de l'invention est celui des procédés permettant de corriger des données de positionnement qu'une plateforme transmet à une autre plateforme.

Les plateformes, en particulier les véhicules terrestres, et notamment les véhicules de combat, sont fréquemment conduites à se transmettre des données de positionnement. Il peut s'agir du positionnement d'une menace à neutraliser ou bien de celui d'un objectif à rallier.

Chaque plateforme est dotée d'un repère propre et elle est capable de se positionner par rapport à un repère absolu (ou repère terrestre $R_{Ter}$). Pour cela elle met en oeuvre des moyens de localisation, par exemple un dispositif de localisation par satellite (connu sous l'acronyme GNSS qui signifie « Géolocalisation et Navigation par un Système de Satellites »), et également des moyens de navigation, par exemple une centrale inertielle.

D'autres moyens de mesure peuvent être prévus, par exemple des inclinomètres pour l'acquisition de la pente et du dévers de la plateforme, ce qui permet d'en déduire les angles d'attitude (tangage et roulis).

Chaque plateforme mobile sur un terrain possède son repère propre dont la position et les orientations dans un repère absolu terrestre peuvent être connues. Selon des normes de cartographies bien connues la position de la plateforme pourra par exemple être exprimée par les coordonnées dans un système géodésique mondial (par exemple le système WGS84 défini par la norme OTAN STANAG 2211). La conversion en latitude et longitude des coordonnées établies dans le système WGS84 peut être faite aisément par des algorithmes qui sont le plus souvent incorporés aux dispositifs GNSS. Ainsi, à tout moment, il est possible de mesurer la position absolue de l'origine du repère propre d'une plateforme dans le repère absolu terrestre, qui est connue par exemple par le GNSS, ainsi que les orientations du repère propre d'une plateforme (angles de cap, de roulis et de tangage) dans le repère absolu terrestre, qui sont obtenues par exemple grâce à une centrale inertielle.

Il est fréquent qu'une plateforme communique ses données de position absolue de son repère propre à une seconde plateforme, de sorte que la seconde plateforme puisse localiser la première plateforme dans son repère propre. Toutefois les systèmes GNSS présentent des erreurs structurelles de positionnement qui se cumulent d'une plateforme à l'autre. La première plateforme transmet à la deuxième plateforme la position absolue de l'origine de son repère propre qui est entachée d'une erreur due au système GNSS de la première plateforme.

La deuxième plateforme traite cette information en y ajoutant une seconde erreur de positionnement qui est due à son propre système GNSS.

De la même façon, si une première plateforme localise dans son repère propre une menace sur le terrain par un moyen de désignation dont elle est dotée, elle va mesurer des angles de pointage qui seront entachés des erreurs de mesure associées aux angles d'attitude (cap, tangage, roulis) de la plateforme fournis par exemple par la centrale inertielle. Ces erreurs se cumuleront avec celles apportées par le GNSS et l'information de localisation d'une menace transmise aux autres plateformes sous la forme d'une position dans le repère absolu terrestre pourra être difficilement exploitable.

En effet l'erreur sur une position absolue mesurée par un système GNSS est généralement estimée de l'ordre de 1 à 5 mètres et l'erreur sur le cap fourni par la centrale inertielle est couramment de l'ordre de la dizaine de milliradians.

Dans ces conditions il est très improbable que la position absolue reçue d'une autre plateforme permette de désigner avec une précision suffisante un objectif exigeant une précision de l'ordre du mètre, par exemple pour identifier une fenêtre dans une façade d'immeuble, dans un contexte de combat urbain.

Pour remédier à ces imprécisions dans les positions absolues, il est possible d'exploiter des moyens inertiels très précis et très coûteux ou bien de mettre en oeuvre des procédés de recalage périodiques des repères courants des plateformes, par exemple à l'aide de bases cartographiques.

La demande de brevet américain US 2018/128621A1 divulgue un procédé de suivi d'une cible se déplaçant entre des états dans un environnement selon l'état de la technique.

C'est le but de l'invention que de proposer un procédé qui permette de corriger les données de positionnement échangées entre les plateformes en évitant tout cumul d'erreurs de positionnement.

Le procédé selon l'invention permet alors un partage effectif des localisations lorsque les plateformes évoluent dans une zone de terrain commune, c'est-à-dire une zone pour laquelle elles ont une visibilité simultanée sur une portion de terrain commune qui constitue ainsi un référentiel local où opèrent les plateformes.

Grâce à ce partage il devient possible de désigner une menace entre deux ou plusieurs plateformes partageant le même référentiel local (la même zone de terrain observée).

A partir d'une localisation d'une menace dans le repère propre d'une première plateforme, une seconde plateforme pourra alors localiser précisément dans son repère propre cette même menace en appliquant des corrections sur la position absolue de la menace telle que fournie par la première plateforme.

Ce partage de référentiel local pourra être réalisé à tout moment en fonction des caractéristiques du terrain.

Ainsi le procédé selon l'invention permet, à partir d'informations de localisation dans le repère propre d'une première plateforme, de convertir rapidement et facilement ces informations dans le repère propre d'une seconde plateforme, sans cumuler les erreurs dues aux moyens de localisation et d'orientations dans un repère absolu terrestre.

L'invention permet ainsi de définir un procédé de partage des données de désignation de menace entre plusieurs plateformes. Ainsi l'invention a pour objet un procédé de correction de données de positionnement, fournies par une première plateforme $V_1$, dotée d'un premier repère géométrique $R_{G1}$, à une seconde plateforme $V_2$, dotée d'un second repère géométrique $R_{G2}$, les deux plateformes étant positionnées de telle sorte qu'elles ont une zone de terrain commune dans leur champ d'observation, procédé dans lequel les localisations absolues et les angles d'attitude des plateformes $V_1$ et $V_2$ dans un repère terrestre $R_{Ter}$ sont connues aux erreurs de mesure près, procédé caractérisé en ce que :

- on calcule au niveau de la première plateforme $V_1$ puis on transmet à la seconde plateforme $V_2$ les positions dans le repère absolu terrestre $R_{Ter}$ d'un premier groupe $A_1$ de N amers présents sur le terrain et vus de la première plateforme $V_1$, positions dites absolues $P_{A1}(i)$, i variant de 1 à N ;
- on calcule au niveau de la seconde plateforme $V_2$, les positions dans le repère absolu terrestre $R_{Ter}$ d'un second groupe $A_2$ de M amers présents sur le terrain et vus de la seconde plateforme $V_2$, positions dites absolues $P_{A2}(j)$, j variant de 1 à M ;

- on met en oeuvre, au niveau de la seconde plateforme $V_2$, un algorithme d'optimisation appliqué à un changement de repère $C(T,RO_2)$, algorithme qui fait, en une recherche incrémentale d'optimalité, successivement pivoter selon les angles de rotation R autour de l'origine $O_2$ du second repère géométrique $R_{G2}$, puis translater d'un vecteur de translation T, suivant des pas d'incrément successifs de tailles décroissantes, le premier groupe d'amers $A_1$ et qui détermine, pour chaque pas d'incrément de l'algorithme d'optimisation, une position, dite estimée $P_{eA1}$, de chaque amer du premier groupe d'amers $A_1$, soit $P_{eA1}(i)$ pour i variant de 1 à N, et qui calcule pour chaque pas d'incrément de l'algorithme d'optimisation un critère de proximité Q entre les positions absolues $P_{A2}(j)$ des amers du second groupe $A_2$ et les positions estimées $P_{eA1}(i)$ des amers du premier groupe $A_1$ ;
- on arrête l'algorithme d'optimisation lorsque les pas courants d'incrément de l'algorithme d'optimisation ne conduisent plus à améliorer le critère de proximité Q ou qu'ils sont inférieurs à des valeurs fixées à l'avance, valeurs qui ont été choisies pour correspondre à la précision de localisation recherchée ;
- on mémorise les valeurs de rotation $R_{opt}$ et translation $T_{opt}$ du changement de repère optimal $C_{opt}$ ayant conduit à la précision souhaitée ;
- on corrige au niveau de la seconde plateforme $V_2$ au moins une information de position absolue fournie par la première plateforme $V_1$ en appliquant à cette information de position le changement de repère optimal $C_{opt}$.

Selon un mode particulier de réalisation, le critère de proximité Q comporte un calcul mettant en oeuvre toutes les différentes distances euclidiennes entre les positions estimées $P_{eA1}(i)$ de chaque amer du premier groupe d'amers $A_1$ et les positions absolues $P_{A2}(j)$ de chaque amer du second groupe d'amers $A_2$, ce critère de proximité s'écrivant de la façon suivante :

[Math. 1]

$$Q(PeA1, PA2) = \sum_{i=1}^{N} \left[ \prod_{j=1}^{M} \min\left(1, \frac{\|\overrightarrow{PeA1(i)PA2(j)}\|}{D}\right) \right]$$

expression dans laquelle :

- $P_{eA1}(i)$ pour i variant de 1 à N correspond aux N positions estimées des amers du premier groupe d'amers $A_1$, c'est-à-dire aux N positions affectées aux amers $A_1(i)$ après une opération de changement de repère $C(T,RO_2)$ appliquée aux N positions absolues des amers du premier groupe d'amers $A_1$ ;
- $P_{A2}(j)$ pour j variant de 1 à M correspond aux M positions absolues des amers du second groupe d'amers $A_2$ ;
-                                             ·[Math. 2]

$$\overrightarrow{PeA1(i)PA2(j)}$$

est le vecteur reliant la position $P_{eA1}(i)$ à la position $P_{A2}(j)$ ;

[Math. 3]

$$\left\| \overline{P_{eA1(i)}P_{A2(j)}} \right\|$$

est la norme de ce vecteur ;
- D correspond à un majorant de la distance entre chaque amer du second groupe d'amers $A_2$ et l'origine $O_2$ du repère $R_{G2}$ lié à la seconde plateforme $V_2$.

Avantageusement, l'algorithme d'optimisation du changement de repère est un algorithme de type descente de gradient qui donne priorité aux rotations.

Selon un mode particulier de réalisation, les positions absolues $P_{A1}(i)$ des N amers du premier groupe d'amers $A_1$ sont transmises par la première plateforme $V_1$ sans données d'altitude et l'algorithme d'optimisation du changement de repère $C(T,RO_2)$ est alors conduit dans le plan horizontal passant par $O_2$, le vecteur de translation T étant alors de dimension 2 et la rotation R étant alors une rotation en cap centrée au point $O_2$, c'est à dire une rotation selon l'axe vertical du second repère $R_{G2}$.

L'invention a également pour objet un procédé d'inter-désignation de menaces, entre une première plateforme $V_1$ et une seconde plateforme $V_2$, procédé dans lequel chaque plateforme comporte un moyen de visée et de désignation de menace couplé à une conduite de tir comportant un moyen de calcul associé à des moyens de communication, procédé dans lequel :

- la première plateforme réalise une localisation d'une menace Z située sur le terrain et transmet à la seconde plateforme la position $P_Z$, dans le repère absolu $R_{Ter}$, de ladite menace Z en plus des positions $P_{A1}$ dans le repère absolu $R_{Ter}$ du premier groupe d'amers $A_1$ qu'elle voit sur le terrain ;
- la seconde plateforme $V_2$ détermine le changement de repère optimal $C_{opt}$ en mettant en oeuvre le procédé de correction de données de positionnement selon une des caractéristiques précédentes ;
- la seconde plateforme corrige la position $P_Z$, dans le repère absolu $R_{Ter}$, de ladite menace qu'elle a reçue de la première plateforme $V_1$ par application à cette position $P_Z$ du changement de repère optimal $C_{opt}$, conduisant ainsi au calcul d'une position de menace corrigée $P_Z'$ ;
- la seconde plateforme $V_2$ calcule dans le second repère géométrique $R_{G2}$ la localisation de la menace Z à partir de la position de menace corrigée $P_Z'$.

L'invention sera mieux comprise à la lecture de la description d'un mode particulier de réalisation, description faite en référence aux dessins annexés et dans lesquels :

[Fig. 1] montre de façon schématique deux plateformes positionnées sur le terrain ainsi que plusieurs groupes d'amers vus par ces plateformes ;
[Fig. 2] montre de façon schématique ces mêmes plateformes ainsi que les erreurs de localisations des amers et des plateformes dues à leur propres moyens de positionnement ; [Fig. 3] schématise un exemple d'algorithme mis en oeuvre par le procédé selon l'invention.

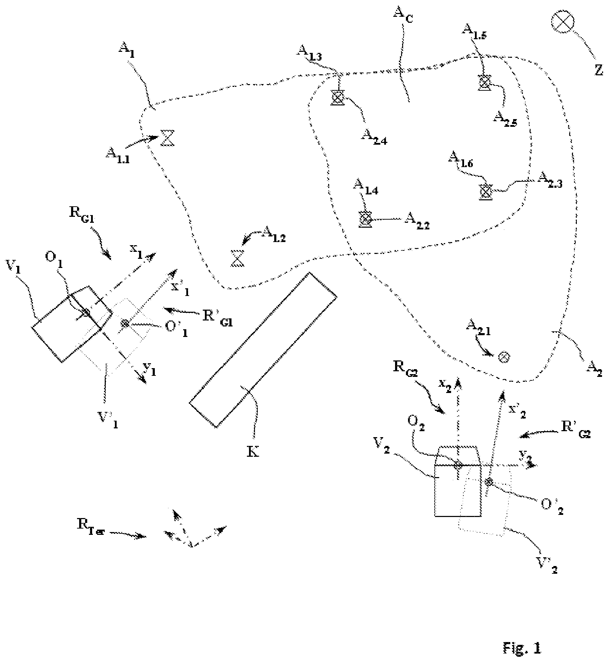

En se reportant à la figure 1, on a représenté une zone de terrain plate et horizontale sur laquelle sont positionnées deux plateformes $V_1$ et $V_2$. Les plateformes sont par exemples des véhicules blindés. La première plateforme $V_1$ est dotée d'un premier repère géométrique $R_{G1}$ d'origine $O_1$ et dont on ne voit ici que deux axes, le troisième axe étant perpendiculaire au plan de la figure. L'axe $O_1x_1$ est l'axe de roulis de la plateforme $V_1$ et l'axe $O_1y_1$ est l'axe de tangage de la plateforme $V_1$. L'axe perpendiculaire à ces deux axes (non visible) est l'axe de cap (ou de lacet).

La seconde plateforme $V_2$ est dotée d'un second repère géométrique $R_{G2}$ d'axe $O_2$. L'axe $O_2x_2$ est l'axe de roulis de la plateforme $V_2$ et l'axe $O_2y_2$ est l'axe de tangage de la plateforme $V_2$. L'axe perpendiculaire à ces deux axes (non visible) est l'axe de cap (ou de lacet).

D'une façon classique chaque plateforme $V_1$ et $V_2$ est équipée de moyens de localisation, par exemple un dispositif de localisation par satellite (ou GNSS). Chaque plateforme est également dotée de moyens de mesure de ses angles de cap, de tangage et roulis, par exemple une centrale inertielle dotée de gyromètres. Chaque plateforme enfin est dotée de moyens d'observation (viseur numérique) couplés à des moyens de calcul, lui permettant d'observer le terrain et de localiser des objets ou amers présents sur le terrain.

Ainsi chaque plateforme $V_1$ et $V_2$ est capable de se localiser dans un repère terrestre de référence $R_{Ter}$.

Chaque plateforme peut aussi localiser les amers observés dans son repère propre ou bien dans le repère de référence $R_{Ter}$.

Comme on le voit sur la figure 1, les deux plateformes $V_1$ et $V_2$ sont positionnées de telle sorte qu'un obstacle K (mur ou immeuble par exemple) se trouve entre elles.

Par ailleurs chaque plateforme $V_1$ et $V_2$ peut observer à l'aide de ses moyens d'observation optiques ou optroniques (viseur numérique par exemple) les amers $A_i$ ou $A_j$ présents sur le terrain.

Plus précisément la première plateforme $V_1$ peut observer un premier groupe $A_1$ de N amers présents sur le terrain. Chaque amer de ce premier groupe $A_1$ est repéré ici par les lettres $A_{1.1}$, $A_{1.2}$,... $A_{1.i}$... $A_{1.N}$. On a représenté sur la figure 1 six amers qui composent le premier groupe $A_1$.

La seconde plateforme $V_2$ peut observer un second groupe $A_2$ de M amers présents sur le terrain. Chaque amer de ce second groupe $A_2$ est repéré ici par les lettres $A_{2.1}$, $A_{2.2}$,... $A_{2.j}$... $A_{2.M}$. On a représenté sur la figure 1 cinq amers qui composent le second groupe $A_2$.

On voit sur la figure 1 que le premier groupe $A_1$ et le second groupe $A_2$ ont une partie commune $A_C$ formée de quatre amers désignés : $A_{1.3}$, $A_{1.4}$, $A_{1.5}$ et $A_{1.6}$ (vus de la première plateforme $V_1$) ou $A_{2.2}$, $A_{2.3}$, $A_{2.4}$ et $A_{2.5}$ (vus de la seconde plateforme $V_2$).

Comme précisé dans le préambule, chaque plateforme $V_1$ et $V_2$ se localise dans le repère terrestre $R_{Ter}$ avec une erreur due à son propre système de localisation GNSS.

Par ailleurs les plateformes $V_1$ et $V_2$ mesurent leurs angles d'attitude (cap, tangage et roulis) avec une incertitude due aux dérives de la centrale inertielle.

On a représenté en pointillés sur la figure 1, les positions $V'_1$ et $V'_2$ des plateformes telles que mesurées par les moyens dont dispose chaque plateforme. On voit donc qu'il y a des écarts de localisation des centres $O_1$ et $O_2$ de chaque repère qui sont vus en $O'_1$ par la plateforme $V_1$ et en $O'_2$ par la plateforme $V_2$.

On voit enfin que les axes (ici seuls les axes de roulis sont représentés) $x_1$ et $x_2$ sont pivotés. La première plateforme $V_1$ voit son axe de roulis $O_1x_2$ en $O'_1x'_1$ et la seconde plateforme $V_2$ voit son axe de roulis $O_2x_2$ en $O'_2x'_2$. Le repère $R_{G1}$ devient un repère $R'_{G1}$ et le repère $R_{G2}$ devient un repère $R'_{G2}$.

Ces erreurs sur les localisations et les angles des repères impliquent des mesures qui seront erronées pour les positions des différents amers.

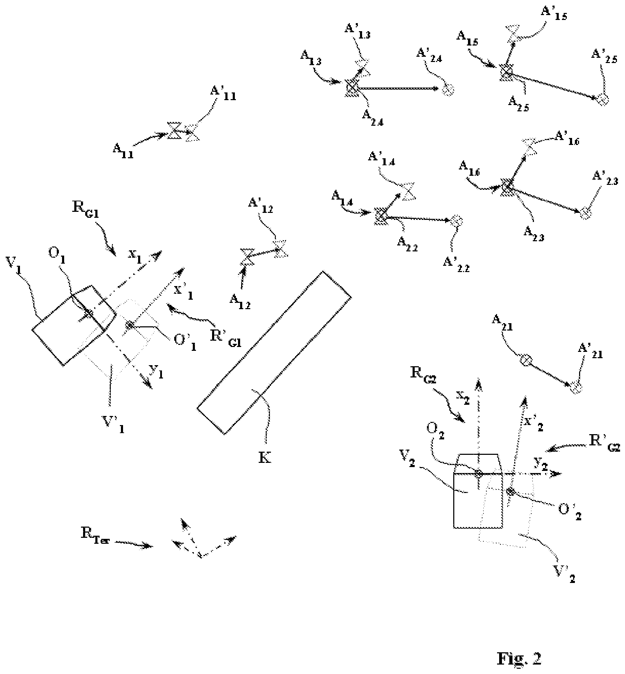

A titre d'exemple, la figure 2 est analogue à la figure 1 mais elle montre, en plus des positions effectives des différents amers $A_{1.i}$ et $A_{2.j}$ sur le terrain, les positions des amers qui sont estimées par chacune des plateformes $V_1$ et $V_2$. Ces dernières positions sont respectivement notées $A'_{1.i}$ et $A'_{2.j}$ et sont figurées en pointillés.

Pour matérialiser la dérive des observations, des flèches sont positionnées sur la figure 2 entre les positions réelles des amers et leurs positions estimées par l'une ou l'autre plateforme.

On remarque que, bien que certains amers soient observés par les deux plateformes, et même si la seconde plateforme $V_2$ reçoit de la première plateforme $V_1$ les localisations estimées par la seconde plateforme dans le repère terrestre $R_{Ter}$, il n'y a pas de superposition des groupes d'amers.

Les écarts observés résultent des décalages entre les positions des centres $O'_1$ et $O'_2$ mesurées par chacune des deux plateformes ainsi que des décalages des axes des deux repères $R'_{G1}$ et $R'_{G2}$.

Le procédé selon l'invention va chercher à minimiser les écarts en procédant de façon itérative à des changements de repère permettant d'obtenir un recouvrement partiel des amers communs. Il permettra ainsi de déterminer le changement de repère permettant de passer de $R_{G1}$ à $R_{G2}$ en tenant compte des erreurs cumulées des moyens de mesure des plateformes $V_1$ et V2.

Ainsi selon le procédé proposé :
On calcule au niveau de la première plateforme $V_1$ puis on transmet à la seconde plateforme $V_2$ les positions dans le repère absolu $R_{Ter}$ du premier groupe $A_1$ d'amers présents sur le terrain et vus de la première plateforme $V_1$, positions dites absolues $P_{A1}(i)$, i variant de 1 à N.

On calcule au niveau de la seconde plateforme $V_2$, les positions dans le repère absolu $R_{Ter}$ d'un second groupe $A_2$ de M amers présents sur le terrain et vus de la seconde plateforme $V_2$, positions dites absolues $P_{A2}(j)$, j variant de 1 à M.

Le calculateur de la seconde plateforme $V_2$ a ainsi à sa disposition deux jeux de coordonnées dans le même repère absolu $R_{Ter}$ : celles du premier groupe $A_1$ d'amers et celles du second groupe d'amers $A_2$.

On met ensuite en oeuvre, au niveau de la seconde plateforme V2, un algorithme d'optimisation appliqué à un changement de repère $C(T,RO_2)$. Ce changement de repère comprend une translation T et une rotation d'axe $O_2$ : $RO_2$.

L'algorithme recherche un optimal de façon incrémentale. C'est de façon préférée un algorithme de type descente de gradient donnant priorité aux rotations.

Cet algorithme fait d'abord pivoter selon les angles de rotation R autour de l'origine $O_2$ du second repère géométrique $R_{G2}$, puis il fait translater d'un vecteur de translation T, les positions dans le repère absolu $R_{Ter}$ du premier groupe $A_1$ d'amers présents sur le terrain et vus de la première plateforme $V_1$, positions dites absolues $P_{A1}(i)$. Lors de chaque pas d'incrément (de rotation ou de translation) les positions absolues $P_{A1}(i)$ deviendront des positions estimées que l'on notera $P_{eA1}(i)$ pour i variant de 1 à N.

Lors de chaque pas d'incrément on calculera un critère de proximité Q entre les positions absolues $P_{A2}(j)$ des amers du second groupe $A_2$ et les positions ainsi estimées $P_{eA1}(i)$ des amers du premier groupe $A_1$.

Ce critère de proximité est défini pour donner une image d'une « distance » entre le groupe des positions absolues $P_{A2}(j)$ et celui des positions estimées $P_{eA1}(i)$ .

Cependant comme il y a N amers vus de la plateforme $V_1$ et M amers vus de la plateforme $V_2$, N pouvant être différent de M, le critère de proximité Q devra faire intervenir toutes les distances euclidiennes possibles entre les positions estimées $P_{eA1}(i)$ de chaque amer du premier groupe d'amers $A_1$ et les positions absolues $P_{A2}(j)$ de chaque amer du second groupe d'amers $A_2$.

Le minimum du critère de proximité Q devra correspondre au meilleur recouvrement possible entre les deux groupes d'amers $A_1$ et $A_2$.

Un exemple de critère de proximité s'écrit de la façon suivante :

[Math. 1]

$$Q(PeA1, PA2) = \sum_{i=1}^{N} \left[ \prod_{j=1}^{M} \min\left(1, \frac{\|\overline{PeA1(i)PA2(j)}\|}{D}\right) \right]$$

expression dans laquelle :

- $P_{eA1}(i)$ pour i variant de 1 à N correspond aux N positions estimées des amers du premier groupe d'amers $A_1$, c'est-à-dire aux N positions affectées aux amers $A_1(i)$ après une opération de changement de repère $C(T,RO_2)$ appliquée aux N positions absolues des amers du premier groupe d'amers $A_1$ ;
- $P_{A2}(j)$ pour j variant de 1 à M correspond aux M positions absolues des amers du second groupe d'amers $A_2$ ;
-

$\cdot$ [Math. 2]

$$\overrightarrow{PeA1(i)PA2(j)}$$

est le vecteur reliant la position $P_{eA1}(i)$ à la position $P_{A2}(j)$ ;

-

$\cdot$ [Math. 3]

$$\left\|\overrightarrow{PeA1(i)PA2(j)}\right\|$$

est la norme de ce vecteur;
- D correspond à un majorant de la distance entre chaque amer du second groupe d'amers $A_2$ et l'origine $O_2$ du repère $R_{G2}$ lié à la seconde plateforme $V_2$.

Les incréments de changement de repère sont réalisés à partir d'une valeur initiale ($cap_0$, $tangage_0$, $roulis_0$) des angles de cap, tangage et roulis (rotation du repère $R_{G2}$ autour de l'origine $O_2$) et d'une valeur initiale des positions de l'origine $O_2$ ($x_0$, $y_0$, $z_0$). Ces valeurs sont incrémentées, au fur et à mesure de la progression de l'algorithme de valeurs d'incréments : $\pm\Delta cap_l$, $\pm\Delta tangage_l$, $\pm\Delta roulis_l$, $\pm\Delta x_l$, $\pm\Delta y_l$, $\pm\Delta z_l$. La valeur initiale de chaque incrément est choisie de l'ordre de l'incertitude sur la mesure correspondante, et elle est diminuée progressivement par division par deux jusqu'à arrêt de l'algorithme d'optimisation.

Cet arrêt interviendra lorsque les pas courants d'incrément de l'algorithme d'optimisation ne conduisent plus à améliorer le critère de proximité Q. Concrètement soit le critère de proximité ne peut plus s'améliorer ($\Delta Q = 0$), soit les pas courants d'incréments sont inférieurs à des valeurs fixées à l'avance, valeurs qui ont été choisies pour correspondre à la moitié de la précision de localisation recherchée. C'est cette dernière option qui se produit le plus souvent : on arrêtera l'algorithme lorsque la finesse recherchée est atteinte.

Il est en effet inutile de rechercher un changement de repère sur la base de modifications des angles ou de la position de $O_2$ d'une valeur inférieure à la précision recherchée. Lorsque l'algorithme s'arrête, on mémorise les valeurs optimales de rotation $R_{opt}$ et de translation $T_{opt}$ du changement de repère optimal $C_{opt}$ ayant conduit à la précision souhaitée. Ces valeurs sont celles qui permettent d'obtenir, au sens du critère de proximité Q utilisé, le recouvrement optimal des amers vus par chacune des deux plateformes. Le changement de repère optimal $C_{opt}$ permet donc de corriger au niveau de la seconde plateforme $V_2$ toutes les informations de positions absolues qui seront fournies par la

première plateforme $V_1$ et corrige donc les erreurs de positionnement et d'orientation des deux plateformes, sans pour autant qu'il soit nécessaire de connaître les dites erreurs.

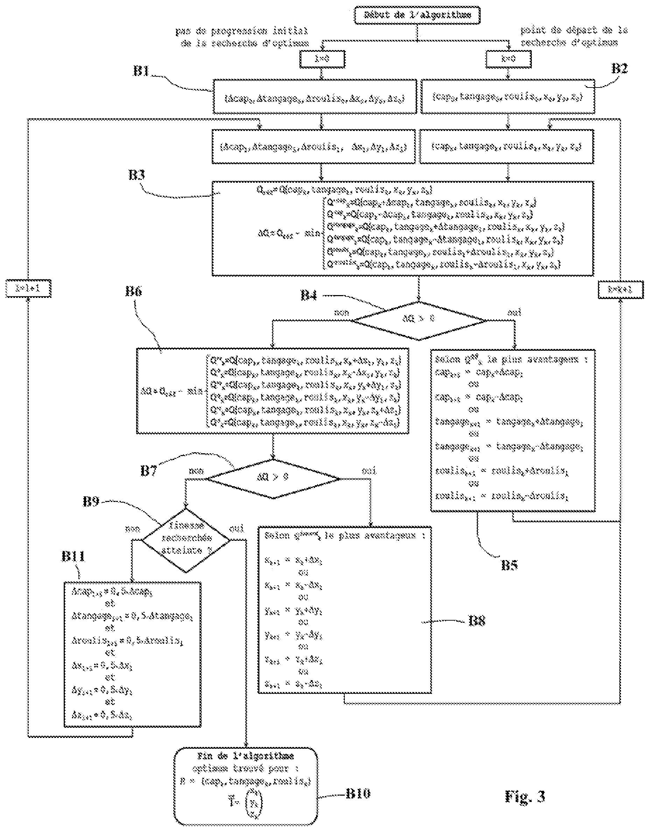

La figure 3 permet de mieux comprendre le fonctionnement de l'algorithme.

Le bloc B1 correspond à l'initialisation des incréments, ou à la mise en place de l'incrément initial (l=0) sur les différentes coordonnées : $\Delta cap_0, \Delta tangage_0, \Delta roulis_0, \Delta x_0, \Delta y_0, \Delta z_0$ Le bloc B2 correspond à l'initialisation (k=0) des coordonnées du changement de repère :

$cap_0$, $tangage_0$, $roulis_0$, $x_0$, $y_0$, $z_0$

Une première boucle algorithmique fait évoluer pas à pas avec un indice noté k la recherche des valeurs optimales pour les différentes rotations (cap,tangage,roulis) et les translations suivant les différents axes (x,y,z).

Le bloc B3 correspond aux calculs :

- du critère de proximité Q décrit précédemment lorsque les angles et coordonnées sont à l'indice k, ce critère de référence pour l'étape est noté

$$Q_{ref} = Q(cap_k, tangage_k, roulis_k, x_k, y_k, z_k)$$

- des critères de proximité $Q^{\pm\theta}_k$ qui sont calculés pour chaque incrément appliqué en négatif ou en positif sur chacun des angles.

On note de façon générique $\theta$ la variation des rotations qu'elle soit en cap, en tangage ou en roulis.

Comme on le voit sur la figure 3 (bloc B3) :

$$Q^{+cap}_k = Q(cap_k + \Delta cap_l, tangage_k, roulis_k, x_k, y_k, z_k)$$

$$Q^{-cap}_k = Q(cap_k - \Delta cap_l, tangage_k, roulis_k, x_k, y_k, z_k)$$

$$Q^{+tangage}_k = Q(cap_k, tangage_k + \Delta tangage_l, roulis_k, x_k, y_k, z_k)$$

$$Q^{-tangage}_k = Q(cap_k, tangage_k - \Delta tangage_l, roulis_k, x_k, y_k, z_k)$$

$$Q^{+roulis}_k = Q(cap_k, tangage_k, roulis_k + \Delta roulis_l, x_k, y_k, z_k)$$

$$Q^{-roulis}_k = Q(cap_k, tangage_k, roulis_k - \Delta roulis_l, x_k, y_k, z_k)$$

Les $\Delta\theta_l$ (ou $\Delta cap_l, \Delta tangage_l, \Delta roulis_l$) sont les incréments utilisés pour la boucle de calcul à cet instant. Ces incréments partent des valeurs $\Delta cap_0, \Delta tangage_0, \Delta roulis_0$ choisies au départ et s'incrémenteront (d'un indice l) dans le cadre d'une deuxième boucle de calcul décrite par la suite.

On calcule enfin au bloc B3 la valeur :

$$\Delta Q = Q_{ref} - \min(Q^{\pm\theta}_k).$$

Cette opération vise à rechercher l'évolution angulaire la plus avantageuse pour minimiser le critère Q.

Le bloc B4 est un test qui vérifie si $\Delta Q$ est positif ou négatif.

Si le test est positif, cela signifie que la recherche de la meilleure rotation doit se poursuivre. On va donc incrémenter le processus k=k+1, en choisissant (bloc B5) comme donnée de départ celle ayant conduit au choix le plus avantageux, c'est-à-dire le minimum des $Q^{\pm\theta}_k$. Comme noté sur la figure 3 (bloc B5), on pourra donc avoir :

$$cap_{k+1} = cap_k + \Delta cap_l$$

ou

$$cap_{k+1} = cap_k - \Delta cap_1$$

ou

$$tangage_{k+1} = tangage_k + \Delta tangage_1$$

ou

$$tangage_{k+1} = tangage_k - \Delta tangage_1$$

ou

$$roulis_{k+1} = roulis_k + \Delta roulis_1$$

ou

$$roulis_{k+1} = roulis_k - \Delta roulis_1$$

On recherche ainsi progressivement les meilleures rotations possibles suivant les trois axes permettant de minimiser le critère Q.

Lorsque le test B4 est négatif, l'algorithme passe au bloc B6 dans lequel on calcule (pour l'indice k auquel se trouve l'algorithme) les critères de proximité $Q^{\pm coord}_k$ qui sont calculés pour chaque incrément appliqué en négatif ou en positif sur chacune des coordonnées (x,y,z).

Comme on le voit sur la figure 3 (bloc B6) :

$$Q^{+x}_k = Q(cap_k, tangage_k, roulis_k, x_k + \Delta x_1, y_k, z_k)$$

$$Q^{-x}_k = Q(cap_k, tangage_k, roulis_k, x_k - \Delta x_1, y_k, z_k)$$

$$Q^{+y}_k = Q(cap_k, tangage_k, roulis_k, x_k, y_k + \Delta y_1, z_k)$$

$$Q^{-y}_k = Q(cap_k, tangage_k, roulis_k, x_k, y_k - \Delta y_1, z_k)$$

$$Q^{+z}_k = Q(cap_k, tangage_k, roulis_k, x_k, y_k, z_k + \Delta z_1)$$

$$Q^{-z}_k = Q(cap_k, tangage_k, roulis_k, x_k, y_k, z_k - \Delta z_1)$$

On calcule enfin au bloc B6 la valeur :

$$\Delta Q = Q_{ref} - \min(Q^{\pm coord}_k).$$

Cette opération vise à rechercher l'évolution en translation la plus avantageuse pour minimiser le critère Q.

Le bloc B7 est un test qui vérifie si $\Delta Q$ est positif ou négatif.

Si le test est positif, cela signifie que la recherche de la meilleure translation doit se poursuivre. On va donc incrémenter le processus k=k+1 en choisissant (bloc B8) comme donnée de départ celle ayant conduit au choix le plus avantageux, c'est-à-dire le minimum des $Q^{\pm coord}_k$. Comme noté sur la figure 3 (bloc B8), on pourra donc avoir :

$$x_{k+1} = x_k + \Delta x_l$$

ou

$$x_{k+1} = x_k - \Delta x_l$$

ou

$$y_{k+1} = y_k + \Delta y_l$$

ou

$$y_{k+1} = y_k - \Delta y_l$$

ou

$$z_{k+1} = z_k + \Delta z_l$$

ou

$$z_{k+1} = z_k - \Delta z_l$$

On recherche ainsi progressivement les meilleures translations possibles suivant les trois axes permettant de minimiser le critère Q.

On a donc dans le cadre de l'algorithme priorisé la recherche de la meilleure rotation avant de rechercher la meilleure translation.

Lorsque le test B7 est négatif, l'algorithme passe au bloc B9 qui est un test de l'obtention ou non de la meilleure finesse (ou précision) de calcul.

Cette finesse est un élément mis en mémoire dans le calculateur. Il pourra s'agir d'une valeur de l'ordre de 2,5 milliradians pour les incréments d'angle et de 0,5 mètres pour les incréments de translation. Une telle précision permettra la désignation de cibles de taille réduite, par exemple un tireur isolé opérant depuis une fenêtre située à 200 mètres des plateformes.

Si la précision maximale est atteinte (test B9 positif) l'algorithme est stoppé (bloc B10). Bien entendu les optimums trouvés pour les valeurs des angles de cap, tangage et roulis et pour les valeurs des translation en x, y et z ont été progressivement mémorisés.

L'algorithme fournit donc en sortie du bloc B10 :

-    la rotation optimale $R_{opt}$ = ($cap_k$, $tangage_k$, $roulis_k$) et
-    la translation optimale $T_{opt}$ ($x_k$, $y_k$, $z_k$)

On connaît donc le changement de repère optimal $C_{opt}$ ayant conduit à la précision souhaitée.

Si la précision maximale n'est pas atteinte (test B9 négatif), le critère Q doit pouvoir être encore minimisé.

On met en oeuvre alors une deuxième boucle d'algorithme (d'indice I) dans laquelle on va modifier les différents incréments en les réduisant de moitié.

On fixe alors (bloc B11) tous les incréments pour l'indice I+1 :

$$\Delta cap_{l+1} = 0,5 . \Delta cap_l$$

$$\Delta\text{tangage}_{l+1} = 0,5 \cdot \Delta\text{tangage}_{l}$$

$$\Delta\text{roulis}_{l+1} = 0,5 \cdot \Delta\text{roulis}_{l}$$

$$\Delta x_{l+1} = 0,5 \cdot \Delta x_{l}$$

$$\Delta y_{l+1} = 0,5 \cdot \Delta y_{l}$$

$$\Delta z_{l+1} = 0,5 \cdot \Delta z_{l}$$

Et on réitère les étapes précédentes (blocs B3 à B9) jusqu'à ce que la finesse recherchée soit atteinte.

D'une façon théorique, il est possible de stopper l'algorithme avant l'étape B9 si le critère de proximité ne peut plus s'améliorer ($\Delta Q = 0$).

Mais concrètement ce cas a peu de chance de se produire et on arrêtera plutôt l'algorithme lorsque la finesse recherchée sera atteinte.

On voit donc que le procédé selon l'invention permet de s'affranchir des erreurs des systèmes de navigation et de localisation sans qu'il soit nécessaire de connaître lesdites erreurs.

Il suffit que les deux plateformes puissent observer une zone commune de terrain dans laquelle se trouvent un certain nombre de repères ou amers.

On a remarqué qu'il n'était pas non plus nécessaire que les plateformes aient le même nombre d'amers, ni même qu'elles sachent quels amers elles ont en commun.

L'algorithme de proximité permet de trouver le changement de repère permettant de minimiser les écarts.

Concrètement, pour la précision du calcul, il sera avantageux que les plateformes retiennent chacune un nombre d'amers de l'ordre de 20, et que par leurs choix d'amers le nombre d'amers communs soit au moins de 40%.

Il est par ailleurs préférable que les amers correspondent à des zones géométriques pouvant être pointées de façon précise suivant différentes directions. On préférera donc les amers correspondant à des intersection de lignes ou d'arêtes, par exemple des sommets d'immeubles, de murs, des poteaux ou piliers.

Ceci est particulièrement bien adapté au combat en zone urbaine.

Selon un mode particulier de réalisation, les positions absolues $P_{A1}(i)$ des N amers du premier groupe d'amers $A_1$ pourront être transmises par la première plateforme $V_1$ sans données d'altitude.

Dans ce cas l'algorithme d'optimisation du changement de repère $C(T,RO_2)$ sera conduit dans le plan horizontal passant par $O_2$.

Le vecteur de translation T est alors de dimension 2 et la rotation R est une simple rotation en cap, centrée au point $O_2$, c'est à dire une rotation selon l'axe vertical du second repère $R_{G2}$.

Ce mode de calcul est plus rapide et bien adapté aux détermination dans des zones de terrain planes pour lesquels la notion d'altitude est inutile.

La correction de données de positionnement permise par l'invention permet de faciliter l'inter désignation de menaces entre deux plateformes.

Suivant l'invention, chaque plateforme comporte un moyen de visée et de désignation de menace (moyen classique non représenté) qui est couplé à une conduite de tir comportant un moyen de calcul associé à des moyens de communication. Suivant l'invention la première plateforme $V_1$ réalisera une localisation d'une menace Z (figure 1) située sur le terrain et transmettra à la seconde plateforme la position $P_Z$, dans le repère absolu $R_{Ter}$, de ladite menace Z en plus des positions $P_{A1}$ dans le repère absolu $R_{Ter}$ du premier groupe d'amers $A_1$ qu'elle voit sur le terrain.

La seconde plateforme $V_2$ déterminera ensuite le changement de repère optimal $C_{opt}$ en mettant en oeuvre le procédé de correction de données de positionnement proposé par l'invention, puis elle corrigera la position $P_Z$, dans le repère absolu $R_{Ter}$, de ladite menace qu'elle a reçue de la première plateforme $V_1$ par application à cette position $P_Z$ du changement de repère optimal $C_{opt}$.

La seconde plateforme $V_2$ calcule ainsi une position de menace corrigée $P'_Z$ et c'est cette position corrigée qu'elle va utiliser pour localiser la menace Z dans son second repère géométrique $R_{G2}$ pour pouvoir assurer le traitement de cette menace.

L'invention fournit ainsi un procédé d'inter-désignation de menaces entre plateformes, procédé dans lequel les imprécisions et dérives des moyens de navigation et localisation sont compensées.

Ceci est particulièrement avantageux dans le cadre du combat urbain pour permettre la désignation de menaces de dimensions réduites.

**Revendications**

1. Procédé de correction de données de positionnement, fournies par une première plateforme (V $_1$), dotée d'un premier repère géométrique (R $_{G1}$ ), à une seconde plateforme (V $_2$), dotée d'un second repère géométrique (R $_{G2}$), les deux plateformes étant positionnées de telle sorte qu'elles ont une zone de terrain commune dans leur champ d'observation, procédé dans lequel les localisations absolues et les angles d'attitude des plateformes (V $_1$) et (V $_2$) dans un repère terrestre (R $_{Ter}$) sont connues aux erreurs de mesure près, procédé **caractérisé en ce que** :

   - on calcule au niveau de la première plateforme (V $_1$) puis on transmet à la seconde plateforme (V $_2$) les positions dans le repère absolu terrestre (R $_{Ter}$) d'un premier groupe (A $_1$) de N amers présents sur le terrain et vus de la première plateforme (V $_1$), positions dites absolues P $_{A1}$(i), i variant de 1 à N ;
   - on calcule au niveau de la seconde plateforme (V $_2$), les positions dans le repère absolu terrestre (R $_{Ter}$) d'un second groupe (A $_2$) de M amers présents sur le terrain et vus de la seconde plateforme (V $_2$), positions dites absolues P $_{A2}$(j), j variant de 1 à M ;
   - on met en oeuvre, au niveau de la seconde plateforme (V $_2$), un algorithme d'optimisation appliqué à un changement de repère C(T,RO $_2$), algorithme qui fait, en une recherche incrémentale d'optimalité, successivement pivoter selon les angles de rotation R autour de l'origine (O $_2$) du second repère géométrique (R $_{G2}$), puis translater d'un vecteur de translation T, suivant des pas d'incrément successifs de tailles décroissantes, les positions absolues P $_{A1}$ (i) du premier groupe d'amers (A $_1$) et qui détermine, pour chaque pas d'incrément de l'algorithme d'optimisation, une position, dite estimée P $_{eA1}$, de chaque amer du premier groupe d'amers (A $_1$), soit P $_{eA1}$(i) pour i variant de 1 à N, et qui calcule pour chaque pas d'incrément de l'algorithme d'optimisation un critère de proximité Q entre les positions absolues P $_{A2}$(j) des amers du second groupe (A $_2$) et les positions estimées P $_{eA1}$(i) des amers du premier groupe (A $_1$) ;
   - on arrête l'algorithme d'optimisation lorsque les pas courants d'incrément de l'algorithme d'optimisation ne conduisent plus à améliorer le critère de proximité Q ou qu'ils sont inférieurs à des valeurs fixées à l'avance, valeurs qui ont été choisies pour correspondre à la précision de localisation recherchée ;
   - on mémorise les valeurs de rotation R $_{opt}$ et translation T $_{opt}$ du changement de repère optimal C $_{opt}$ ayant conduit à la précision souhaitée ;
   - on corrige au niveau de la seconde plateforme (V $_2$) au moins une information de position absolue fournie par la première plateforme (V $_1$) en appliquant à cette information de position le changement de repère optimal C $_{opt}$.

2. Procédé de correction de données de positionnement selon la revendication 1, **caractérisé en ce que** le critère de proximité Q comporte un calcul mettant en oeuvre toutes les différentes distances euclidiennes entre les positions estimées P $_{eA1}$(i) de chaque amer du premier groupe d'amers (A $_1$) et les positions absolues P $_{A2}$(j) de chaque amer du second groupe d'amers (A $_2$), ce critère de proximité s'écrivant de la façon suivante :

   -

[Math. 1]

$$Q(PeA1, PA2) = \sum_{i=1}^{N} \left[ \prod_{j=1}^{M} \min\left(1, \frac{\|PeA1(i) \ominus PA2(j)\|}{D}\right) \right]$$

expression dans laquelle :
- P $_{eA1}$(i) pour i variant de 1 à N correspond aux N positions estimées des amers du premier groupe d'amers (A $_1$), c'est-à-dire aux N positions affectées aux amers A $_1$(i) après une opération de changement de repère C(T,RO $_2$) appliquée aux N positions absolues des amers du premier groupe d'amers (A $_1$) ;
- P $_{A2}$(j) pour j variant de 1 à M correspond aux M positions absolues des amers du second groupe d'amers (A $_2$) ;
-

[Math. 2]

$$\overrightarrow{P_{eA1}(i)P_{A2}(j)}$$

est le vecteur reliant la position $P_{eA1}(i)$ à la position $P_{A2}(j)$ ;

-

[Math. 3]

$$\left\|\overrightarrow{P_{eA1}(i)P_{A2}(j)}\right\|$$

est la norme de ce vecteur ;
- D correspond à un majorant de la distance entre chaque amer du second groupe d'amers ($A_2$) et l'origine ($O_2$) du repère ($R_{G2}$) lié à la seconde plateforme ($V_2$).

3. Procédé de correction de données de positionnement selon une des revendications 1 ou 2, **caractérisé en ce que** l'algorithme d'optimisation du changement de repère est un algorithme de type descente de gradient qui donne priorité aux rotations.

4. Procédé de correction de données de positionnement selon une des revendications 1 à 3, **caractérisé en ce que** les positions absolues $P_{A1}(i)$ des N amers du premier groupe d'amers ($A_1$) sont transmises par la première plateforme ($V_1$) sans données d'altitude et **en ce que** l'algorithme d'optimisation du changement de repère C(T,RO$_2$) est alors conduit dans le plan horizontal passant par ($O_2$), le vecteur de translation T étant alors de dimension 2 et la rotation R étant alors une rotation en cap centrée au point ($O_2$), c'est à dire une rotation selon l'axe vertical du second repère ($R_{G2}$).

5. Procédé d'inter-désignation de menaces entre une première plateforme ($V_1$) et une seconde plateforme ($V_2$), procédé dans lequel chaque plateforme comporte un moyen de visée et de désignation de menace couplé à une conduite de tir comportant un moyen de calcul associé à des moyens de communication, procédé mettant en oeuvre le procédé de correction de données de positionnement selon une des revendications 1 à 4 et dans lequel :

   - la première plateforme réalise une localisation d'une menace (Z) située sur le terrain et transmet à la seconde plateforme la position $P_Z$, dans le repère absolu ($R_{Ter}$), de ladite menace (Z) en plus des positions $P_{A1}$ dans le repère absolu ($R_{Ter}$) du premier groupe d'amers ($A_1$) qu'elle voit sur le terrain ;
   - la seconde plateforme ($V_2$) détermine le changement de repère optimal C$_{opt}$ ;
   - la seconde plateforme corrige la position $P_Z$, dans le repère absolu ($R_{Ter}$), de ladite menace qu'elle a reçue de la première plateforme ($V_1$) par application à cette position $P_Z$ du changement de repère optimal C$_{opt}$, conduisant ainsi au calcul d'une position de menace corrigée P'$_Z$ ;
   - la seconde plateforme ($V_2$) calcule dans le second repère géométrique ($R_{G2}$) la localisation de la menace (Z) à partir de la position de menace corrigée P'$_Z$.

**Patentansprüche**

1. Korrekturverfahren für Positionsdaten, die von einer ersten Plattform ($V_1$), die mit einer ersten geometrischen Markierung ($R_{G1}$) versehen ist, an eine zweite Plattform ($V_2$), die mit einer zweiten geometrischen Markierung ($R_{G2}$) versehen ist, bereitgestellt werden, wobei die zwei Plattformen positioniert sind, um einen gemeinsamen Geländebereich in ihrem Beobachtungsfeld aufzuweisen, wobei bei dem Verfahren die absoluten Orte und die Lagewinkel der Plattformen ($V_1$) und ($V_2$) in einem Erdkoordinatensystem ($R_{Ter}$) bis auf Messfehler bekannt sind, wobei das Verfahren **dadurch gekennzeichnet ist, dass**:

   - die Positionen in dem absoluten terrestrischen Koordinatensystem ($R_{Ter}$) einer ersten Gruppe ($A_1$) von N Landmarken, die auf dem Gelände vorhanden sind und von der ersten Plattform ($V_1$) aus gesehen werden, auf Ebene der ersten Plattform ($V_1$) berechnet und dann an die zweite Plattform ($V_2$) übertragen werden, wobei diese Positionen als absolute Positionen $P_{A1}(i)$ bezeichnet werden, wobei i von 1 bis N variiert;

- die Positionen in dem absoluten terrestrischen Koordinatensystem ($R_{Ter}$) einer zweiten Gruppe ($A_2$) von M Landmarken, die sich auf dem Gelände befinden und von der zweiten Plattform ($V_2$) aus gesehen werden, auf Ebene der zweiten Plattform ($V_2$) berechnet werden, wobei diese Positionen als absolute Positionen $P_{A2}(j)$ bezeichnet werden, wobei j von 1 bis M variiert;

- auf Ebene der zweiten Plattform ($V_2$) ein Optimierungsalgorithmus implementiert wird, der auf eine Änderung des Bezugssystems $C(T,RO_2)$ angewendet wird, wobei der Algorithmus die absoluten Positionen $P_{A1}(i)$ in einer inkrementellen Optimalitätssuche nacheinander gemäß den Drehwinkeln R um den Ursprung ($O_2$) des zweiten geometrischen Bezugssystems ($R_{G2}$) dreht und dann um einen Translationsvektor T in aufeinanderfolgenden Inkrementschritten mit abnehmender Größe der ersten Gruppe von Landmarken ($A_1$) translatiert und für jeden Inkrementschritt des Optimierungsalgorithmus eine Position, genannt geschätzter $P_{eA1}$, von jeder Landmarke der ersten Gruppe von Landmarken ($A_1$) bestimmt, d. h. $P_{eA1}(i)$ für i, das von 1 bis N variiert, und für jeden Inkrementschritt des Optimierungsalgorithmus ein Kriterium für die Nähe Q zwischen den absoluten Positionen $P_{A2}(j)$ der Landmarken der zweiten Gruppe ($A_2$) und den geschätzten Positionen $P_{eA1}(i)$ der Landmarken der ersten Gruppe ($A_1$) berechnet;

- der Optimierungsalgorithmus angehalten wird, wenn die aktuellen Inkrementschritte des Optimierungsalgorithmus nicht mehr zu einer Verbesserung des Proximitätskriteriums Q führen oder wenn sie unterhalb von vorab festgelegten Werten liegen, die gewählt wurden, um der angestrebten Lokalisierungsgenauigkeit zu entsprechen;

- die Rotationswerte $R_{opt}$ und Translationswerte $T_{opt}$ des optimalen Koordinatensystemwechsels $C_{opt}$, der zur gewünschten Genauigkeit geführt hat gespeichert werden;

- auf Ebene der zweiten Plattform ($V_2$) mindestens eine absolute Positionsformation korrigiert wird, die von der ersten Plattform ($V_1$) bereitgestellt wird, indem auf diese Positionsinformationen die optimale Änderung des Koordinatensystems $C_{opt}$ angewendet wird.

2. Korrekturverfahren für Positionsdaten nach Anspruch 1, **dadurch gekennzeichnet, dass** das Näherungskriterium Q eine Berechnung umfasst, die alle verschiedenen euklidischen Distanzen zwischen den geschätzten Positionen $P_{eA1}(i)$ von jeder Landmarke der ersten Gruppe von Landmarken ($A_1$) und den absoluten Positionen $P_{A2}(j)$ von jeder Landmarke der zweiten Gruppe von Landmarken ($A_2$) einsetzt, wobei dieses Näherungskriterium wie folgt geschrieben wird:

[Math. 1]

$$Q(PeA1, PA2) = \sum_{i=1}^{N} \left[ \prod_{j=1}^{M} \min\left(1, \frac{\|\overline{PeA1(i)PA2(j)}\|}{D}\right) \right]$$

wobei in diesem Ausdruck

- $P_{eA1}(i)$ für i als Variante von 1 bis N den N geschätzten Positionen der Landmarken der ersten Gruppe von Landmarken ($A_1$) entspricht, d. h. den N Positionen, die den Landmarken $A_1(i)$ nach einer auf die N absoluten Positionen der Landmarken der ersten Gruppe von Landmarken ($A_1$) angewandten Koordinatensystem-Änderungsoperation $C(T,RO_2)$ zugewiesen wurden;

- $P_{A2}(j)$ für j als Variante von 1 bis M den M absoluten Positionen der Landmarken der zweiten Gruppe von Landmarken ($A_2$) entspricht;

[Math. 2]

$$\overrightarrow{PeA1(i)PA2(j)}$$

ist der Vektor, der die Position $P_{eA1}(i)$ mit der Position $P_{A2}(j)$ verbindet;

[Math. 3]

$$\left\|\overrightarrow{PeA1(i)PA2(j)}\right\|$$

ist die Norm dieses Vektors;

- D entspricht einem Majoranten des Abstands zwischen jeder Landmarke der zweiten Gruppe von Landmarken ($A_2$) und dem Ursprung ($O_2$) des Koordinatensystems ($R_{G2}$), das mit der zweiten Plattform ($V_2$) verbunden ist.

3. Korrekturverfahren für Positionsdaten nach einem der Ansprüche 1 oder 2, **dadurch gekennzeichnet, dass** der Algorithmus zur Optimierung des Koordinatensystemwechsels ein Algorithmus vom Gradientenabstiegstyp ist, der Rotationen Priorität einräumt.

4. Korrekturverfahren für Positionsdaten nach einem der Ansprüche 1 bis 3, **dadurch gekennzeichnet, dass** die absoluten Positionen $P_{A1}(i)$ der N Landmarken der ersten Gruppe von Landmarken ($A_1$) von der ersten Plattform ($V_1$) ohne Höhendaten übertragen werden und dass der Optimierungsalgorithmus für den Koordinatensystemwechsel $C(T,RO_2)$ dann in der durch ($O_2$) verlaufenden horizontalen Ebene durchgeführt wird, wobei der Translationsvektor T dann die Dimension 2 aufweist und die Rotation R dann eine auf den Punkt ($O_2$) zentrierte Kursrotation ist, d. h. eine Rotation entlang der vertikalen Achse des zweiten Koordinatensystems ($R_{G2}$) .

5. Verfahren zur gegenseitigen Bezeichnung von Bedrohungen zwischen einer ersten Plattform ($V_1$) und einer zweiten Plattform ($V_2$), wobei bei dem Verfahren jede Plattform ein Mittel zum Anvisieren und Bezeichnen einer Bedrohung umfasst, das mit einer Feuerleitung gekoppelt ist, die eine Recheneinrichtung umfasst, die mit Kommunikationseinrichtungen assoziiert ist, wobei das Verfahren das Korrekturverfahren für Positionsdaten nach einem der Ansprüche 1 bis 4 durchführt und wobei:

   - die erste Plattform eine Lokalisierung einer auf dem Feld befindlichen Bedrohung (Z) durchführt und der zweiten Plattform die Position $P_Z$ in dem absoluten Koordinatensystem ($R_{Ter}$) der Bedrohung (Z) zusätzlich zu den Positionen $P_{A1}$ in dem absoluten Koordinatensystem ($R_{Ter}$) der ersten Gruppe von Landmarken ($A_1$), die sie auf dem Feld sieht, überträgt;
   - die zweite Plattform ($V_2$) den optimalen Koordinatensystemwechsel $C_{opt}$ bestimmt;
   - die zweite Plattform die Position $P_Z$ in dem absoluten Koordinatensystem ($R_{Ter}$) der genannten Bedrohung, die sie von der ersten Plattform ($V_1$) empfangen hat, korrigiert, indem sie auf diese Position $P_Z$ die optimale Koordinatensystemänderung $C_{opt}$ anwendet, was zu einer Berechnung einer korrigierten Bedrohungsposition $P'_z$ führt;
   - die zweite Plattform ($V_2$) in dem zweiten geometrischen Koordinatensystem ($R_{G2}$) den Ort der Bedrohung (Z) anhand der korrigierten Bedrohungsposition $P'_z$ berechnet.

**Claims**

1. A method for correcting positioning data, supplied by a first platform ($V_1$), provided with a first geometric reference frame ($R_{G1}$), to a second platform ($V_2$), provided with a second geometric reference frame ($R_{G2}$), the two platforms being positioned such that they have a common area of land in their field of observation, in which method the absolute locations and the attitude angles of the platforms ($V_1$) and ($V_2$) in a land reference frame ($R_{Ter}$) are known to within any measurement errors, which method is **characterized in that**:

   - the positions in the absolute land reference frame ($R_{Ter}$) of a first group ($A_1$) of N landmarks present on the land and seen from the first platform ($V_1$) are calculated at the first platform ($V_1$), then transmitted to the second platform ($V_2$), which positions are called absolute positions $P_{A1}(i)$, i varying from 1 to N;
   - the positions in the absolute land reference frame ($R_{Ter}$) of a second group ($A_2$) of M landmarks present on the land and seen from the second platform ($V_2$) are calculated at the second platform ($V_2$), which positions are called absolute positions $P_{A2}(j)$, j varying from 1 to M;
   - at the second platform ($V_2$), an optimization algorithm is implemented which is applied to a change of reference frame $C(T,RO_2)$, which algorithm, by performing an incremental optimality search, successively causes the absolute positions $P_{A1}(i)$ of the first group of landmarks ($A_1$) to pivot by the rotation angles R about the origin ($O_2$) of the second geometric reference frame ($R_{G2}$), then to translate by a translation vector T, according to successive increment steps of decreasing sizes, and determines, for each increment step of the optimization algorithm, a position, called estimated position $P_{eA1}$, of each landmark of the first group of landmarks ($A_1$), namely $P_{eA1}(i)$ for i varying from 1 to N, and calculates, for each increment step of the optimization algorithm, a proximity criterion Q between the absolute positions $P_{A2}(j)$ of the landmarks of the second group ($A_2$) and the estimated positions $P_{eA1}(i)$ of the landmarks of the first group ($A_1$);

- the optimization algorithm is stopped when the current increment steps of the optimization algorithm no longer lead to improving the proximity criterion Q or when they are below preset values, values which have been chosen to correspond to the desired location precision;

- the rotation $R_{opt}$ and translation $T_{opt}$ values of the optimal reference frame change $C_{opt}$ having led to the desired precision are stored;

- at least one absolute position information item supplied by the first platform ($V_1$) is corrected at the second platform ($V_2$) by applying the optimal reference frame change $C_{opt}$ to this position information item.

2. The method for correcting positioning data according to claim 1, **characterized in that** the proximity criterion Q includes a calculation implementing all the different Euclidean distances between the estimated positions $P_{eA1}(i)$ of each landmark of the first group of landmarks ($A_1$) and the absolute positions $P_{A2}(j)$ of each landmark of the second group of landmarks ($A_2$), this proximity criterion being written as follows:

-

[Math. 1]

$$Q(PeA1, PA2) = \sum_{i=1}^{N} \left[ \prod_{j=1}^{M} \min\left(1, \frac{\|\overrightarrow{PeA1(i)PA2(j)}\|}{D}\right) \right],$$

in which expression:

- $P_{eA1}(i)$ for i varying from 1 to N corresponds to the N estimated positions of the landmarks of the first group of landmarks ($A_1$), that is, to the N positions assigned to the landmarks $A_1(i)$ after a reference frame change operation $C(T, RO_2)$ applied to the N absolute positions of the landmarks of the first group of landmarks ($A_1$);

- $P_{A2}(j)$ for j varying from 1 to M corresponds to the M absolute positions of the landmarks of the second group of landmarks ($A_2$);

-

[Math. 2]

$$\overrightarrow{PeA1(i)PA2(j)}$$

is the vector connecting the position $Pe_{A1}(j)$ to the position $P_{A2}(j)$;

-

[Math. 3]

$$\|\overrightarrow{PeA1(i)PA2(j)}\|$$

is the norm of this invention

- D corresponds to an upper bound of the distance between each landmark of the second group of landmarks ($A_2$) and the origin ($O_2$) of the reference frame ($R_{G2}$) connected to the second platform ($V_2$).

3. The method for correcting positioning data according to one of claims 1 or 2, **characterized in that** the algorithm for optimizing the reference frame change is an algorithm of the gradient descent type which gives priority to rotations.

4. The method for correcting positioning data according to one of claims 1 to 3, **characterized in that** the absolute positions $P_{A1}(i)$ of the N landmarks of the first group of landmarks ($A_1$) are transmitted by the first platform ($V_1$) without altitude data and **in that** the algorithm for optimizing the reference frame change $C(T,RO_2)$ is then conducted in the horizontal plane passing through ($O_2$), the translation vector T then being of dimension 2 and the rotation R then being a rotation in heading centered at the point ($O_2$), that is, a rotation along the vertical axis of the second reference frame ($R_{G2}$).

5. A method for inter-designation of threats between a first platform ($V_1$) and a second platform ($V_2$), in which method each platform includes a threat sighting and designation means coupled to a firing control system including a calculating means associated with communication means, this method implementing the method for correcting positioning data according to one of claims 1 to 4 and wherein:

- the first platform locates a threat (Z) situated on the land and sends the second platform the position $P_Z$, in the absolute reference frame ($R_{Ter}$), of said threat (Z) in addition to the positions $P_{A1}$ in the absolute reference frame ($R_{Ter}$) of the first group of landmarks ($A_1$) that it sees on the land;
- the second platform ($V_2$) determines the optimal reference frame change $C_{opt}$;
- the second platform corrects the position $P_Z$, in the absolute reference frame ($R_{Ter}$), of said threat that it has received from the first platform ($V_1$) by applying the optimal reference frame change $C_{opt}$ to this position $P_Z$,
- the second platform ($V_2$) calculates the location of the threat (Z) in the second geometric reference frame ($RG_2$) from the corrected threat position $P'_z$.

Fig. 1

Fig. 2

Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018128621 A1